# DEMANDE DE BREVET EUROPEEN

(11) **EP 4 371 623 A1**
(43) Date de publication de la demande: **22.05.2024**
(21) Numéro de dépôt: 23209658.6
(22) Date de dépôt: 14.11.2023
(51) Int. Cl.: A62D 3/176, B09B 3/50, B29B 17/02, C08J 11/04

(54) **PROCÉDÉ DE DÉGRADATION PHOTOLYTIQUE DES RETARDATEURS DE FLAMME BROMÉS CONTENUS DANS UNE MATIÈRE PLASTIQUE - INSTALLATION ASSOCIÉE**

(30) Priorité: 14.11.2022 FR 2211835
(71) Demandeur: CREPIM, 62700 Bruay la Buissière (FR); Université de Lille, 59800 Lille (FR); Centre National de la Recherche Scientifique, 75794 Paris (FR); Institut National de la Recherche pour l'Agriculture, l'Alimentation et l'Environnement, 75007 Paris (FR); Centrale Lille Institut, 59650 Villeneuve-d'Ascq (FR); Materianova, 7000 Mons (BE)
(72) Inventeur: MASCHKE, Ulrich, 59800 Lille (FR); BRISON, Loïc, 7000 Mons (BE); LAOUTID, Fouad, 7000 Mons (FR); KHELIFI, Skander, 62700 Bruay La Buissière (FR); POUTCH, Franck, 62700 Bruay La Buissière (FR); ALDOORI, Hussam, 59800 Lille (FR); BOUBERKA, Zohra, 59800 Lille (FR); FOISSAC, Corinne, 59800 Lille (FR); OUMEDDOUR, Hanene, 59800 Lille (FR); SUPIOT, Philippe, 59800 Lille (FR); MALAS, Christian, 59800 Lille (FR); Dubois, Philippe, 7000 Mons (BE)
(74) Mandataire: RVDB

(57) **Abrégé**

L'invention concerne un procédé de débromation d'au moins un retardateur de flamme bromé contenu dans une matière plastique, selon lequel on soumet ladite matière plastique à une irradiation dans le spectre UV-visible. De manière caractéristique, ladite irradiation est mise en oeuvre dans une atmosphère qui présente avant l'irradiation, une pression égale ou inférieure à 100 Pa et supérieure ou égale à 0,1 Pa et notamment égale à 2 Pa, 1,5 Pa, 1 Pa ou 0,5 Pa.

## Description

### Domaine technique

La présente invention concerne un procédé de dégradation photolytique des retardateurs de flamme bromés contenus dans une matière plastique à l'état solide ou fondu par irradiation aux rayonnements UV-visible sous une atmosphère à teneur réduite en oxygène.

### Etat de la technique

Les retardateurs de flamme bromés font partie des molécules largement employées dans le passé pour l'ignifugation de plastiques d'équipements électriques et électroniques. L'utilisation de certains de ces retardateurs de flamme bromés les plus connus, tels que les polybromodiphényl éthers (PBDE), est aujourd'hui réglementée en Europe en raison de leur toxicité, leur persistance dans l'environnement et de leur bioaccumulation. La directive européenne RoHS limite la concentration des PBDE dans les équipements électriques et électroniques à 0,1% en masse.

Cependant, ces molécules toxiques se trouvent encore en grandes quantités dans les résidus des équipements électriques et électroniques obsolètes. En effet, près de la moitié de la matière plastique de ces déchets contient des additifs bromés, lesquels resteront présents dans ces matériaux pendant plusieurs années encore.

Par ailleurs, les PBDE en particulier peuvent, par ailleurs, se dégrader par exposition au rayonnement solaire dans les sites de stockage de déchets ou lors de l'incinération pour générer des substances plus nocives telles que les polybromodibenzo-p-dioxines (PBDD) et les polybromodibenzofuranes (PBDF). Les installations de traitement des déchets électroniques actuelles sont reconnues comme une source importante de rejet de retardateurs de flamme bromés dans le milieu environnant. En outre, des pratiques de recyclage téméraires ont même introduit involontairement des retardateurs de flamme bromés dans des articles qui ne sont pas tenus de respecter les exigences en matière de résistance au feu.

Par conséquent, les déchets plastiques chargés en retardateurs de flamme bromés ne peuvent être recyclés, enfouis ou exportés sans un traitement préalable garantissant l'élimination des molécules dangereuses.

Le document US8138232 décrit un procédé de recyclage de plastiques des équipements électriques et électroniques permettant d'enlever les impuretés comme les retardateurs de flammes halogénés. Dans ce procédé, le retardateur de flammes est extrait de la résine avec un solvant. Un désavantage majeur de ce procédé est qu'il nécessite des quantités importantes de solvant qui doivent ensuite être traitées ; de plus, les composants halogénés ne sont pas détruits.

La publication de Kajiwara et al. intitulée « Photolysis Studies of Technical Decabromodiphényl éther (DecaBDE) and ethane (DEBDethane) in plastics under naturel sunlight » publiée dans la revue Environmental Science & Technology en. 2008 (volume 42, n° 112, pages 4404-4409) concerne une évaluation de la photodégradation du décaBDE dans une matrice de polystyrène choc, par exposition au rayonnement solaire, avec un temps de demi-vie estimé à 51 jours. Il a été observé que cette réaction est accélérée quand l'échantillon est hydraté. Cette étude a aussi mis en évidence la formation des congénères des PBDF qui se débroment à leur tour avec le temps d'irradiation.

La publication de Khaled et al. intitulée « Phototransformation of Plastics Containing Brominated Flamme Retardants : Enhanced fragmentation and Release of Photoproducts to Water and Air » publiée dans la revue Environmental Science & Technology en 2018 (volume 52, n°119, pages 11123-11131) concerne la débromation photolytique des RFB dans le polystyrène et dans le THF. Cette publication montre les effets d'interactions mutuelles entre le polystyrène et les ignifugeants bromés de structure aromatique, lesquelles permettent d'accélérer la réaction de débromation. Cependant, cet effet est inversé pour de longues durées d'irradiation où la photooxydation des films de polystyrène ralentit la débromation par un effet d'écran qui empêche la pénétration des rayonnements dans le film. La nature de la matrice polymère exerce donc une grande influence sur la vitesse de photo dégradation. Ainsi, la photo dégradation est plus élevée dans le polystyrène que dans le PET.

Le document EP 2 839 863 A1 décrit un procédé de désactivation de composés bromés contenus dans des matériaux plastiques selon lequel on soumet un broyat d'au moins un matériau plastique contenant au moins un composé bromé à une irradiation UV-visible en utilisant une ou plusieurs sources UV-visible artificielles et dans lequel le ou les composés bromés sont choisis dans le groupe des retardateurs de flamme bromés aromatiques. L'irradiation est mise en oeuvre dans l'air, à pression atmosphérique et à température ambiante. La matière plastique est choisie parmi le polystyrène, les copolymères styréniques, les polyoléfines, les polyamides, les polycarbonates, les polyuréthanes et le polychlorure de vinyle. Le retardateur de flamme est choisi parmi les polybromodiphényles, les polybromodiphényle éthers, les polybromodiphényléthanes et les éthylènebis (polybromophtalimides) et leurs mélanges. Ce procédé permet bien de débromer certains retardateurs de flamme mais il s'avère que la photo dégradation des retardateurs de flamme bromés engendre également la dégradation de la matière plastique, laquelle ne peut plus être recyclée du fait de la dégradation de ses propriétés physico-chimiques.

Le document WO 94/12269 A1 décrit un procédé d'oxydation de la surface de membranes polymériques dont certaines contiennent du tétrabromobisphenol A, un retardateur de flamme. Ce document montre qu'une irradiation UV en l'absence d'oxygène n'oxyde pas la membrane ; la membrane oxydée est sensée être plus sélective qu'avant l'oxydation.

La publication intitulée « multifunctionnal ferrocene-based photo-fenton membrane : an efficient intégration of rejection and catalytic process » de Yang Wang & al publiée dans la revue séparation and purification technology en 2022 montre de manière très schématique une installation qui comporte une enceinte fermée contenant un liquide ; cette enceinte peut être irradiée pour induire une réaction dans le liquide. L'atmosphère est de l'azote et sa pression n'est pas indiquée.

### Problème technique à résoudre

La présente invention vise à améliorer la situation décrite ci-dessus.

Un but de la présente invention est donc de proposer un nouveau procédé de photo dégradation de composé(s) bromé(s) contenus dans un matériau plastique qui permet le recyclage de la matière plastique traitée.

Un autre but de la présente invention est de proposer un nouveau procédé qui permet d'extraire tout ou partie des retardateurs de flamme bromés contenus dans une matière plastique à l'état fondu ou solide.

Un autre but de la présente invention est de proposer un procédé de photo dégradation de composé(s) bromé(s) contenus dans une matière plastique qui soit facilement industrialisable.

### Brève description de l'invention

La présente invention concerne un procédé de débromation d'au moins un retardateur de flamme bromé contenu dans une matière plastique, selon lequel on soumet ladite matière plastique à une irradiation dans le spectre UV-visible. De manière caractéristique, selon l'invention, ladite irradiation est mise en oeuvre dans une atmosphère qui présente avant ladite irradiation, une pression égale ou inférieure à 100 Pa et supérieure ou égale à 0,1 Pa et notamment égale à 2 Pa, 1,5 Pa, 1 Pa ou 0,5 Pa.

Les Inventeurs ont en effet constaté que lorsque la concentration en dioxygène gazeux dans ladite atmosphère est inférieure à une valeur de seuil (non déterminée), la dégradation chimique de la matière plastique occasionnée durant l'irradiation semble limitée voire nulle et une réduction supplémentaire de la concentration en oxygène de l'atmosphère gazeuse n'occasionne pas une diminution notable de la dégradation de la matière plastique. Ainsi, ils ont mis en évidence que la pression réduite précitée facilite la sortie de certaines molécules générées par la dégradation des retardateurs de flamme bromés, hors de la matière plastique à l'état fondu ou solide. Ces molécules peuvent être par exemple des radicaux libres qui s'ils restent dans la matière, risquent de détériorer cette dernière en réagissant chimiquement avec elle, par exemple. Il s'ensuit que la débromation selon le procédé de l'invention endommage moins la matière plastique ; elle peut également être plus rapide, ce qui réduit encore les risques de détérioration de la matière plastique.

De plus, la pression réduite permet de réduire le nombre de radicaux libres formés par irradiation des molécules de dioxygène contenues dans l'atmosphère où est réalisée l'irradiation. En effet, ces radicaux libres sont susceptibles de pénétrer dans la matière plastique et de la détériorer.

Les valeurs de pression précitées correspondent à un vide dit primaire facilement atteint à l'échelle industrielle.

L'atmosphère est de préférence de l'air.

L'air peut être plus ou moins humide.

Selon un mode de mise en oeuvre combinable avec chacun des modes de mise en oeuvre précités, ladite atmosphère contient de l'eau sous forme vapeur. La concentration molaire en vapeur d'eau correspond à la pression de vapeur saturante de l'eau dans l'air à la température et à la pression de l'atmosphère dans laquelle est réalisée l'irradiation.

L'air qui va constituer l'atmosphère peut également être séché avant l'irradiation. Ladite irradiation est de préférence mise en oeuvre à une température égale ou supérieure à 18°C et égale ou inférieure à 25°C ou à température égale ou supérieure à la température de fusion de ladite matière plastique et inférieure à la température de dégradation thermique de ladite matière plastique. De telles températures correspondent aux températures de travail classiques des matières plastiques, ce qui rend le procédé de l'invention facilement industrialisable.

Ainsi, selon une variante combinable à chacun des modes de mises précités, l'atmosphère est de l'air et présente avant l'irradiation, une pression égale ou inférieure à 100 Pa et supérieure ou égale à 0,1 Pa et notamment égale à 2 Pa, 1,5 Pa, 1 Pa ou 0,5 Pa. La baisse de la pression permet de facilement créer à partir d'air, l'atmosphère adaptée à l'irradiation selon le procédé de l'invention.

Lorsque la matière plastique est à l'état fondu, il est aisé de réduire fortement le volume de l'atmosphère gazeuse qui entoure la matière plastique et dans laquelle est mise en oeuvre l'irradiation.

L'irradiation UV-visible est avantageusement effectuée à des longueurs d'ondes égale ou supérieures à 200 nm et inférieures ou égales à 800 nm, de préférence égale ou supérieures à 250 nm et inférieures ou égales à 600 nm (UVA/UVB/visible), et plus préférentiellement égale ou supérieures à 280 nm et inférieures ou égales à 600 nm. À cet effet, on peut utiliser un seul type de source UV-visible ou différents types de sources UV-visible placées en parallèle ou en série.

Le procédé de l'invention permet de traiter tous types de thermoplastes, notamment ceux retrouvés dans les déchets électriques et électroniques tels que les copolymères styréniques, les polycarbonates et les polyamides.

Ainsi, la matière plastique peut être choisie parmi les matières plastiques contenant ou constituées d'au moins un polymère choisi parmi les polystyrènes, les copolymères styréniques, notamment le polystyrène à fort impact et les copolymères styrène-acrylonitrile, les polyoléfines, les polyamides, les polycarbonates, les polyuréthanes, le polychlorure de vinyle, les copolymères acrylonitrile-butadiène-styrène, les copolymères styrène-butadiène, les copolymères acrylonitrile-styrène-acrylate, le polycaprolactame, le polyhexaméthylène adipamide et les mélanges d'au moins deux de ces polymères.

Avantageusement, la matière plastique est choisie parmi les copolymères acrylonitrile-butadiène-styrène (ABS), les copolymères styrène-butadiène (SBS), les copolymères styrène-acrylonitrile (SAN), les copolymères acrylonitrile-styrène-acrylate (ASA), le polystyrène à fort impact ou polystyrène choc (HIPS) et leurs mélanges ; l'ABS étant préféré.

Des exemples non limitatifs de polycarbonates comprennent surtout le polycarbonate de bisphénol A.

Des exemples non limitatifs de polyamides comprennent le polycaprolactame (polyamide-6, PA6) et le polyhexaméthylène adipamide (PA-66), le polycaprolactame (polyamide- 6, PA6) étant préféré.

Selon un mode de mise en oeuvre combinable avec chacun des modes de mise en oeuvre précités, ladite matière plastique est fondue avant ladite irradiation et irradiée à l'état fondu ou ladite matière plastique se trouve sous la forme de morceaux dont la dimension maximale est inférieure ou égale à 3mm ou 2mm.

Quel que soit le mode de mise en oeuvre, ladite irradiation peut être mise en oeuvre au moyen d'au moins une source artificielle UV-visible et notamment la distance entre la ou les sources UV-visible et ladite matière plastique est avantageusement égale ou supérieure à 0,5 cm et égale ou inférieure à 3 cm.

Le procédé selon l'invention peut être appliqué à un matériau plastique seul ou à un mélange de différents matériaux plastiques. Il peut être appliqué pour désactiver tout type de retardateurs de flamme bromés comme les polybromodiphényl éthers (PBDE) ou les hexabromocyclododécanes (HBCDD), ou le tétrabromobisphénol A (TBBPA) et autres phénols, ou les biphényles polybromés (PBB) et les ignifugeants bromés émergeants tels que le phosphate de tris(2,3-dibromopropyle) (TDBPP), le 2,2-bis(bromométhyl)-1,3-propanediol (DBNPG), et le 1,2-bis(2,4,6-tribromophenoxy) éthane (BTBPE).

Ainsi, le retardateur de flamme bromé peut être choisi parmi les retardateurs de flamme bromés dont la molécule contient les retardateurs de flamme bromés dont la molécule contient un pourcentage massique de brome égal ou supérieur à 5 et égal ou inférieur à 30 %, les retardateurs de flamme bromés qui contiennent au moins un cycle benzénique, en particulier les polybromodiphényl éthers, et plus particulièrement l'octabromodiphényl éther et le décabromodiphényl éther, le décabromodiphényl éthane et le tris(tribromophenoxy)-s-triazine, le phosphate de tris(2,3-dibromopropyle), le 2,2-bis(bromométhyl)-1,3-propanediol

Les polybromodiphényl éthers (PBDE) répondent à la formule générale (I). 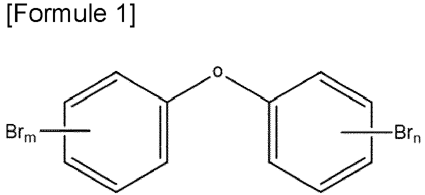 dans laquelle m et n sont indépendamment l'un de l'autre un nombre entier de 1 à 5. De préférence m et n valent tous les deux 4 (octabromodiphényl éther) ou 5 (décabromodiphényl éther).

Des exemples non limitatifs de retardateurs de flamme émergeants comprennent le décabromodiphényl éthane (DBDPE) (voir [Formule 2]) et le tris(tribromophenoxy)-s-triazine (TTBPT) (voir [Formule 3]).

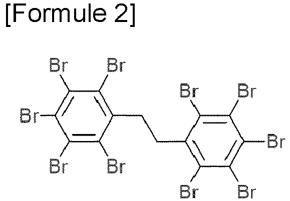

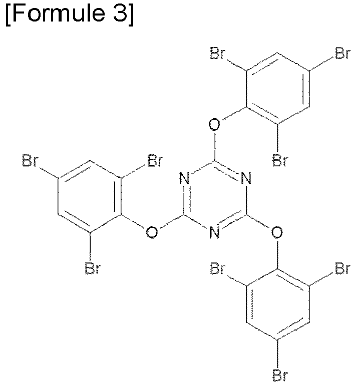

Le procédé de l'invention a notamment été validé pour des échantillons plastiques contenant 10% en poids de retardateurs de flamme bromés sous forme de films fins, d'épaisseur allant de 40 à 120µm et en particulier égale à 25µ ou 30µm. La faible épaisseur permet une bonne pénétration des rayonnements et donc une meilleure efficacité de désactivation des molécules bromées.

La variation des paramètres opératoires permet d'optimiser le procédé en augmentant l'efficacité de désactivation des retardateurs de flamme bromés et en réduisant la détérioration du polymère. Ces paramètres sont notamment l'intensité et le spectre de la source du rayonnement, la distance entre la lampe et la matière plastique ainsi que le temps d'exposition au rayonnement.

L'intensité lumineuse de la ou des sources UV-visible est un facteur important qui influence l'efficacité du traitement UV-visible. L'intensité lumineuse fournie par la ou les sources UV-visible doit être suffisamment élevée pour dépasser l'énergie des liaisons chimiques à rompre.

Selon un mode de mise en oeuvre particulier combinable avec chacun des modes de mise en oeuvre précités sauf pour ce qui concerne la nature de la matière plastique et du retardateur de flamme bromé, la matière plastique est ou contient de l'ABS et le retardateur de flamme bromé est le décabromodiphényl éther ou un mélange de retardateurs de flamme bromés contenant du décabromodiphényl éther ou la matière plastique est un polycarbonate ou un mélange de polycarbonates ou contient au moins un polycarbonate et le retardateur de flamme bromé est le décabromodiphényl éther ou un mélange de retardateurs de flamme bromés contenant du décabromodiphényl éther, ou la matière plastique est ou contient du polystyrène à haut impact et le retardateur de flamme bromé est le décabromodiphényl éther ou un mélange de retardateurs de flamme bromés contenant du décabromodiphényl éther, ou la matière plastique est ou contient de l'ABS et le retardateur de flamme bromé est le décabromodiphényl éthane ou un mélange de retardateurs de flamme bromés contenant du décabromodiphényl éthane ou la matière plastique est un polycarbonate ou un mélange de polycarbonates ou contient au moins un polycarbonate et le retardateur de flamme bromé est le décabromodiphényl éthane ou un mélange de retardateurs de flamme bromés contenant du décabromodiphényl éthane ou la matière plastique est ou contient du polystyrène à haut impact et le retardateur de flamme est le décabromodiphényl éthane ou un mélange de retardateurs de flamme bromés contenant du décabromodiphényl éthane ou la matière plastique est ou contient de l'ABS et le retardateur de flamme bromé est le tris(tribromophenoxy)-s-triazine ou un mélange de retardateurs de flamme bromés contenant du tris(tribromophenoxy)-s-triazine ou la matière plastique est un polycarbonate ou un mélange de polycarbonates ou contient au moins un polycarbonate et le retardateur de flamme bromé est le tris(tribromophenoxy)-s-triazine ou un mélange de retardateurs de flamme bromés contenant du tris(tribromophenoxy)-s-triazine ou la matière plastique est ou contient du polystyrène à haut impact et le retardateur de flamme bromé est le tris(tribromophenoxy)-s-triazine ou un mélange de retardateurs de flamme bromés contenant du tris(tribromophenoxy)-s-triazine.

Quel que soit le mode de mise en oeuvre du procédé de l'invention, la concentration massique dudit/desdits retardateur(s) de flamme bromé(s) est inférieure ou égale à 30% et notamment inférieure ou égale à 10%.

La durée d'irradiation n'est pas limitée selon l'invention. Elle dépend de la quantité de matière plastique à traiter et du spectre UV-visible ainsi que de l'intensité de l'irradiation. Elle est avantageusement inférieure ou égale à 30 minutes et de préférence de l'ordre de 10 à 15 minutes, quel que soit le mode de mise en oeuvre du procédé de l'invention.

La présente invention concerne également un procédé de recyclage d'une matière plastique contenant au moins un retardateur de flamme bromé et qui, de manière caractéristique, comprend une étape de débromation dudit retardateur de flamme bromé selon le procédé de l'invention, suivi d'une étape de mélange avec une matière plastique identique ou compatible avec la matière plastique traitée et exempte de composé bromé, ladite étape de débromation et/ou ladite étape de mélange étant de préférence mise en oeuvre à l'état fondu.

La présente invention concerne également une installation permettant la mise en oeuvre du procédé selon l'invention, du type comportant :
- un dispositif d'irradiation et de mélange de la matière plastique à l'état divisé ou fondu, lequel comporte une paroi externe qui définit un volume interne, lequel est équipé de moyens de mélange, ledit volume interne présentant une entrée et une sortie, au moins une partie de ladite paroi externe est transparente aux longueurs d'ondes égales ou supérieures à 200 nm et égales ou inférieures à 800 nm ; et
- au moins une source de rayonnement UV-visible disposée de manière à irradier ledit volume interne.

De manière caractéristique, selon l'invention, ladite paroi externe comporte des moyens de fermeture aptes à rendre ledit volume interne hermétique/étanche aux gaz et liquides et ledit volume interne est connecté à des moyens d'aspiration aptes à engendrer une pression inférieure à la pression atmosphérique normale en particulier une pression égale ou inférieure à 100 Pa et plus particulièrement égale à 2 Pa, 1,5 Pa, 1 Pa ou 0,5 Pa.

Les moyens de mélange peuvent être, par exemple, un dispositif rotatif du volume interne, un axe muni de pales ou une vis sans fin.

Les moyens d'aspiration peuvent être tout dispositif pouvant créer une dépression dans le volume interne, une pompe à vide à palettes, par exemple. Ce dispositif est peu coûteux.

Avantageusement, l'installation comporte en outre, un mélangeur secondaire de la matière plastique à l'état divisé ou fondu, apte à être alimenté avec une autre matière plastique à l'état fondu et l'entrée dudit mélangeur secondaire est connectée à la sortie du volume interne dudit dispositif d'irradiation et de mélange.

### Définitions

Les acronymes utilisés dans la présente demande de brevet sont explicités ci-dessous.
ABS : copolymère d'acrylonitrile-butadiène-styrène
ATG : analyse thermogravimétrique
ATR : spectroscopie à réflectance totale atténuée
DBDE : décabromodiphényl éther
DBDPE : décabromodiphényl éthane

Le terme « débromation » signifie, au sens de la présente invention, la rupture d'au moins une liaison C-Br dans au moins une molécule d'un retardateur de flamme bromé.
DEEE : déchets d'équipements électriques et électroniques
DSC : calorimétrie différentielle à balayage
FTIR : spectroscopie infrarouge à transformée de Fourier
GC/MS : chromatographie phase gaz couplée avec la spectroscopie de masse
GPC : chromatographie de perméation de gel
HBCD : hexabromocyclododecane
HIPS : polystyrène choc ou polystyrène à haut impact
HS-GC/MS Headspace- chromatographie phase gaz couplée avec la spectroscopie de masse
PBDE : polybromodiphényl éther
PC : polycarbonate
RMN : résonnance magnétique nucléaire
SAN : copolymère styrène-acrylonitrile
TBBPA : tétrabromobisphénol A
TTBPT : tris(tribromophenoxy),triazine
UV : ultra-violet
La pression atmosphérique normale est égale à 101 325 Pa.

Les termes « état divisé» désignent une poudre, des granulés ou des morceaux de taille et formes différentes et notamment des morceaux de formes égales ou diverses dont la dimension maximale est égale ou inférieure à 3 mm, 2 mm, 120µm, 100 µm, 90µm, 80µm ou 60µm et notamment égale ou inférieure à 30µm ou 25µm.

### Description des figures

La présente invention, ses caractéristiques et les divers avantages qu'elle procure apparaitront mieux à la lecture de la description qui suit et qui fait référence aux figures annexées sur lesquelles :
La [Fig. 1A] représente l'évolution de l'absorbance mesurée par spectroscopie infrarouge à transformée de Fourier (FTIR) de l'ABS chargé en DBDE, entre 1275 cm⁻¹ et 1400 cm⁻¹, avant et après différentes durées de traitement selon le procédé de l'invention ;
La [Fig. 1B] représente l'évolution de l'absorbance mesurée par spectroscopie infrarouge à transformée de Fourier (FTIR) de l'ABS chargé en DBDE entre 600 cm⁻¹ et 640 cm⁻¹, avant et après traitement selon le procédé de l'invention et en fonction de la durée du traitement ;
La [Fig. 1C] représente les chromatogrammes en phase gazeuse (GC) des additifs extraits des films d'ABS chargé en DBDE avant et après 15 minutes de traitement selon le procédé de l'invention ;
La [Fig. 1D] représente les thermogrammes obtenus par calorimétrie différentielle à balayage (DSC) (flux de chaleur absorbée par l'échantillon en fonction de la température) de l'ABS vierge et chargé en DBDE avant et après 15 minutes de traitement selon le procédé de l'invention ;
La [Figure 1E] représente l'évolution de l'intensité relative RI en fonction du temps de rétention en minutes mesurée par chromatographie par perméation de gel (GPC) de l'ABS chargé en DBDE avant et après une durée donnée de traitement selon le procédé de l'invention ;
La [Fig. 1F] représente la courbe de traction de l'ABS vierge et celle de l'ABS vierge mélangé avec divers échantillons d'ABS ayant été traités selon le procédé de l'invention et contenant 10% en masse du mélange ABS + retardateur de flamme bromé traité selon le procédé de l'invention ;
La [Fig. 2A] représente l'évolution de l'absorbance mesurée par spectroscopie infrarouge à transformée de Fourier (FTIR) du PC chargé en DBDE entre 1325 cm⁻¹ et 1380 cm⁻¹, avant et après différentes durées de traitement selon le procédé de l'invention ;
La [Fig. 2B] représente les chromatogrammes obtenus en phase gazeuse (GC) des additifs extraits des films du PC chargé en DBDE avant et après 15 minutes de traitement selon le procédé de l'invention ;
La [Fig. 2C] représente les thermogrammes obtenus par DSC (flux de chaleur absorbée par l'échantillon en fonction de la température) du PC vierge et du PC chargé en DBDE avant et après 15 minutes de traitement selon le procédé de l'invention ; La [Fig. 2D] représente l'évolution de l'intensité relative RI mesurée par GPC du PC chargé en DBDE avant et après différentes durées de traitement selon le procédé de l'invention ;
La [Fig. 2E] représente la courbe de traction du PC vierge et celles du PC vierge mélangé avec 10% en masse du mélange PC + retardateur de flamme bromé traité selon le procédé de l'invention ;
La [Fig. 3A] représente l'évolution de l'absorbance mesurée par spectroscopie infrarouge à transformée de Fourier (FTIR) du HIPS chargé en DBDE entre 1250 cm⁻¹ et 1410 cm⁻¹, avant et après différentes durées de traitement (irradiation) selon le procédé de l'invention ;
La [Fig. 3B] représente les thermogrammes (flux de chaleur absorbée par l'échantillon en fonction de la température) obtenus par DSC du HIPS vierge et chargé en DBDE avant et après 15 minutes d'irradiation selon le procédé de l'invention ;
La [Fig. 3C] représente les chromatogrammes obtenus par GPC (intensité relative en fonction du temps de rétention) du HIPS chargé en DBDE avant et après 6 minutes d'irradiation selon le procédé de l'invention ;
La [Fig. 4A] représente l'évolution de l'absorbance mesurée par infrarouge à transformée de Fourier (FTIR) de l'ABS chargé en DBDPE entre 1250 cm⁻¹ et 1410 cm⁻¹, avant et après différentes durées de traitement selon le procédé de l'invention ; La [Fig. 4B] représente l'évolution de l'absorbance mesurée par spectroscopie infrarouge à transformée de Fourier (FTIR) de l'ABS chargé en DBDPE entre 1125 cm⁻¹ et 1150 cm⁻¹, avant et après différentes durées d'irradiation selon le procédé de l'invention ;
La [Fig. 5A] représente l'évolution de l'absorbance mesurée par spectroscopie infrarouge à transformée de Fourier (FTIR) du PC chargé en DBDPE entre 645 cm⁻¹ et 675 cm⁻¹, avant et après différentes durées de traitement selon le procédé de l'invention ;
La [Fig. 5B] représente l'évolution de l'absorbance mesurée par spectroscopie infrarouge à transformée de Fourier (FTIR) du PC chargé en DBDPE entre 1040 cm⁻¹ et 1075 cm⁻¹, avant et après différentes durées de traitement selon le procédé de l'invention ;
La [Fig. 6A] représente l'évolution de l'absorbance mesurée par spectroscopie infrarouge à transformée de Fourier (FTIR) du HIPS chargé en DBDPE entre 1200 cm⁻¹ et 1235 cm⁻¹, avant et après différentes durées d'irradiation selon le procédé de l'invention ;
La [Fig. 6B] représente l'évolution de l'absorbance mesurée par spectroscopie infrarouge à transformée de Fourier (FTIR) du HIPS chargé en DBDPE entre 1120 cm⁻¹ et 1150 cm⁻¹, avant et après différentes durées de traitement selon le procédé de l'invention ;
La [Fig. 7] représente l'évolution du déplacement chimique mesuré par résonance magnétique nucléaire du proton (RMN ¹H) de l'ABS chargé en TTBPT entre 7,680 ppm et 7,705 ppm, avant et après différentes durées de traitement selon le procédé de l'invention ;
La [Fig. 8] représente l'évolution du déplacement chimique mesuré par résonance magnétique nucléaire du proton (RMN ¹H) du PC chargé en TTBPT entre 7,670 ppm et 7,710 ppm, avant et après différentes durées de traitement selon le procédé de l'invention ;
La [Fig. 9] représente l'évolution du déplacement chimique mesuré par résonance magnétique nucléaire du proton (RMN ¹H) du HIPS chargé en TTBPT entre 7,635 ppm et 7,705 ppm, avant et après différentes durées de traitement selon le procédé de l'invention ; et
La [Fig. 10] représente de manière schématique une installation industrielle permettant la mise en oeuvre du procédé de l'invention.

### Description détaillée

### Exemples expérimentaux

### Installation et conditions de traitement et de mesure

Un montage de cellule fermée en PTFE a été utilisé afin d'effectuer des irradiations sous atmosphère contrôlée. Le porte échantillon peut contenir des plastiques sous formes de grains ou des films horizontaux ou inclinés à 45°. La cellule est reliée à une pompe à vide permettant d'atteindre une pression égale ou inférieure à 10⁻² mbar soit 1 Pa. Les expérimentations suivantes ont été réalisées avec un vide correspondant à une pression égale ou inférieure à 1 Pa. La cellule étant remplie initialement d'air, elle contient, une fois que le vide est réalisé, une pression réduite de 10⁻² mbar soit 1 Pa Les spectres FTIR ont été enregistrés dans le mode de transmission à température ambiante avec un appareil de type Perkin Elmer modèle Frontier. Le nombre de balayages accumulés était de 16 avec une résolution spectrale de 4 cm⁻¹. La gamme spectrale étudiée s'étale entre 400 cm⁻¹ et 4000 cm⁻¹.

Les mélanges polymères/TTBPT sont analysés par résonance nucléaire magnétique du proton (RMN H¹). Les films solides sont dissous dans 0,6 ml de chloroforme deutéré (CDCl₃) et analysés dans un appareil Bruker AVANCE III HD avec un champ magnétique de 300 Mhz.

Les mesures de chromatographie d'exclusion de taille (SEC) ont été effectuées à température ambiante sur un système Waters Alliance e2695 utilisant du THF comme solvant avec un débit de 1 ml/min et équipé de trois colonnes placées en série (Styragel HR1, Styragel HR3, Styragel HR4). Un détecteur Wyatt RI (indice de réfraction différentiel) et un détecteur Wyatt MALS (« Multi Angle Light Scattering ») (laser λ= 670 nm) ont été couplés au système. L'étalonnage a été établi avec des étalons de polystyrène (PS) provenant de la société Polymer Laboratories.

Pour chaque analyse, environ 5 mg d'échantillon sont dissous dans 5 ml de tétrahydrofurane (THF). La solution est centrifugée et filtrée dans des filtres à membrane de 0,20 µm.

Les expériences en DSC ont été réalisées en utilisant un appareil Perkin Elmer DSC 8000. Une masse de 6 mg à 12 mg est encapsulée dans un creusé en aluminium. Chaque analyse est faite en 3 cycles de chauffage et de refroidissement de -70°C à 200°C avec une vitesse de rampe de 10°C/min.

Les essais de traction ont été effectuées à l'aide d'un banc de traction Lloyd LR 10K à une vitesse de 10 mm/min en utilisant une distance de 25,4 mm entre les pinces. Les analyses ont été effectuées sur des éprouvettes préalablement conditionnées pendant 48 h à 20±2 °C et à une humidité relative de 50±3% et les valeurs ont été moyennées sur six mesures.

### Mesures préliminaires

Des films d'épaisseurs diverses ont été formés à partir des mélanges polymères-retardateur de flamme bromés exemplifiés ci-dessous. Les inventeurs ont constaté qu'il est possible notamment en une durée égale ou supérieure à 10 min et égale ou inférieure à 30 min d'obtenir la débromation de 100% du retardateur de flamme bromé quand le film présente une épaisseur égale ou inférieure à 25 µm ou 30 µm et de 90% du retardateur de flamme bromé quand le film présente une épaisseur égale ou inférieure à 100 µm et notamment égale ou inférieure à 90µm.

Il est à noter qu'un film d'ABS de 100µm d'épaisseur absorbe jusqu'à 95% de l'intensité du rayonnement dans le spectre des longueurs d'ondes comprises entre 250nm et 400nm partiellement responsables de la photodégradation des retardateurs de flamme bromés. Dans toutes les expérimentations qui suivent, l'irradiation a été mise en oeuvre sous ladite atmosphère à une température égale ou supérieure à 18°C et égale ou inférieure à 25°C.

### Exemple 1 : Traitement de l'ABS contenant du DBDE

Les échantillons d'ABS contenant 10% massique de DBDE ont été traités avec le procédé de l'invention dans l'installation décrite ci-dessus.

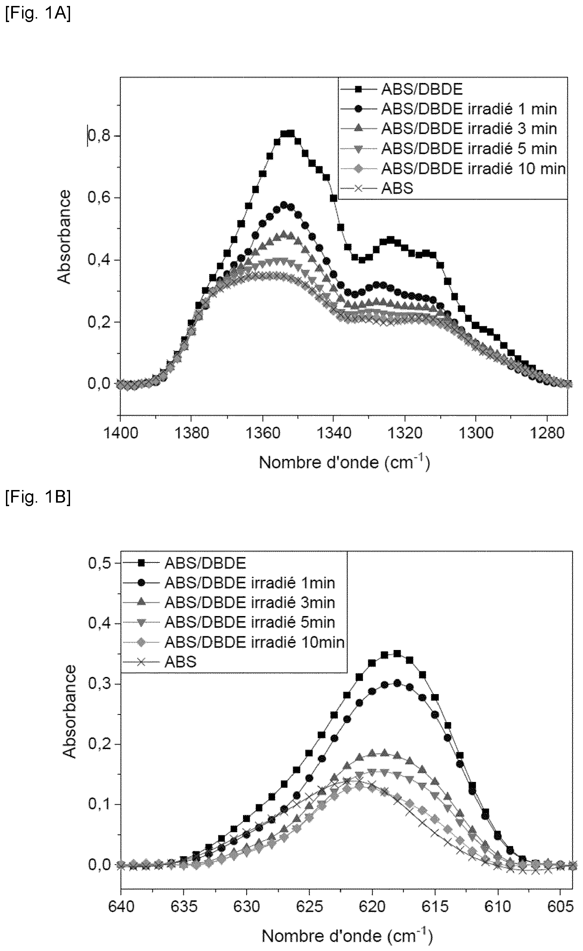

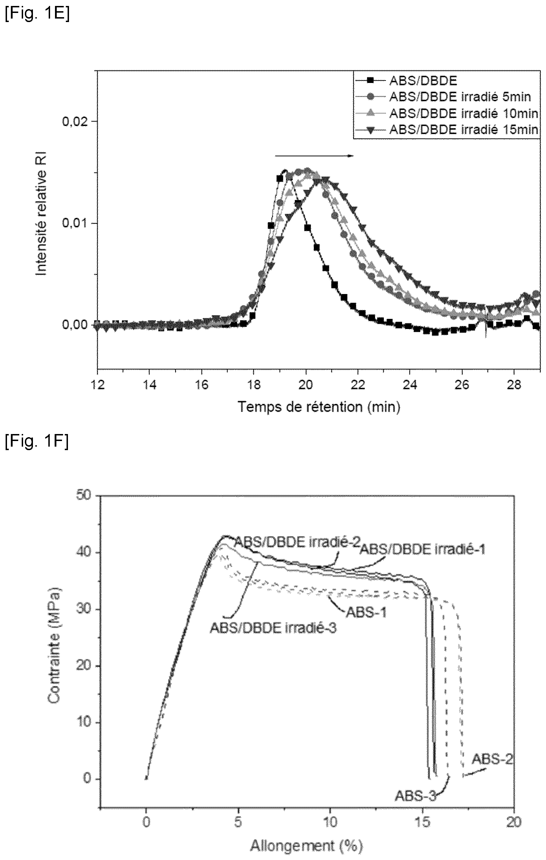

Tous les échantillons sont sous forme de films d'épaisseur moyenne égale à 90 µm. Les figures 1A et 1B montrent l'évolution des bandes 1350 cm⁻¹ et 620 cm⁻¹ du DBDE lors de l'irradiation dans les conditions précitées. On observe une diminution rapide mais décélérée de l'absorbance des bandes infrarouges dans les premières 5 minutes d'irradiation. Après 10 minutes d'exposition, on récupère le niveau d'absorbance de l'ABS vierge, ce qui indique que la concentration du DBDE est descendue en-deçà de la limite de détection de la technique. Ainsi on retrouve une bonne corrélation de l'évolution de la bande C-Br à 615 cm⁻¹ avec celle de la bande C-O-C à 1350 cm⁻¹.

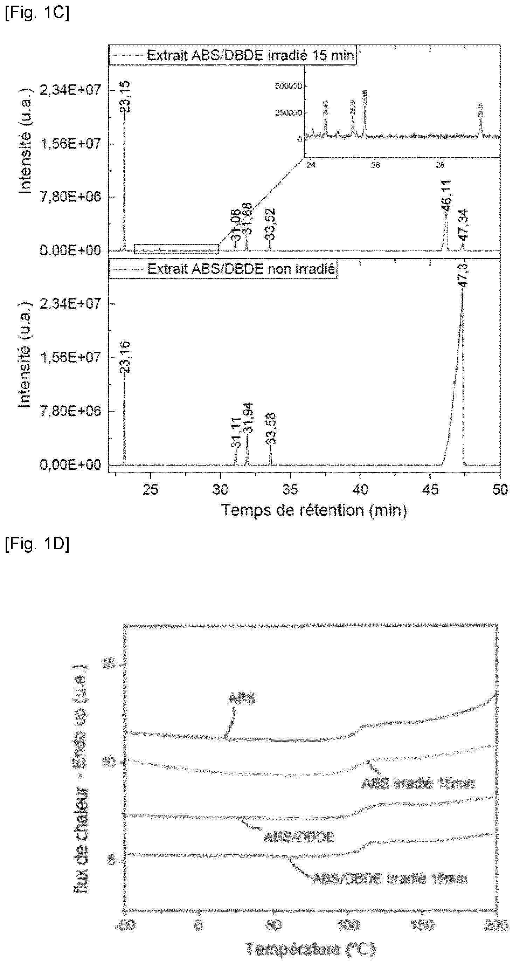

La figure 1C présente les chromatogrammes GC des additifs extraits par un mélange de toluène/éther de pétrole des films d'ABS non irradiés et irradiés pendant 15 minutes. Les solvants utilisés pour l'extraction sont évaporés et les additifs sont solubilisés dans le THF en présence d'un standard externe. Les chromatogrammes obtenus en GC/MS après irradiation montrent la diminution du large pic du DBDE. Une courbe d'étalonnage permet de calculer les concentrations du DBDE à partir des intégrales de ce pic en concentrations correspondantes. On remarque également la décroissance de l'intensité des pics des traces du nonaBDE présents déjà dans le mélange de DBDE commercial. De plus, des traces de congénères moins bromés sont détectés exclusivement dans l'extrait des films irradiés tel que l'heptaBDE et l'hexaBDE.

La figure 1D représente les thermogrammes DSC de l'ABS vierge et chargé avant et après irradiation. Dans le cas de l'ABS vierge, on ne constate aucun changement significatif de la température de transition vitreuse en DSC après traitement selon le procédé de l'invention. La température mesurée est à 110,5 ± 0,2°C, tandis que la température de transition vitreuse moyenne mesurée du polymère chargé en DBDE a augmenté de 3°C pour atteindre une moyenne de 113,0 ± 2,1°C. Cette augmentation peut indiquer une légère réticulation de la matrice accélérée par la présence des radicaux du brome. Cependant, elle reste peu significative vu le large intervalle d'erreur entre les différentes mesures.

La figure 1E représente l'évolution des chromatogrammes GPC des mélanges ABS/DBDE au cours du traitement selon le procédé de l'invention. L'analyse de la partie soluble en GPC représente un décalage du pic du polymère vers les faibles masses. Cela indique une diminution de la masse molaire moyenne des chaines linéaires de l'ABS après irradiation.

Les essais de traction montrent un décalage des courbes de l'ABS après le mélange avec les matériaux irradiés. En effet, la moyenne de l'allongement à la rupture a baissé de 7 %. Inversement, la contrainte à la rupture moyenne a augmenté de 6 % après mélange avec l'échantillon irradié. Ce léger changement peut être lié à la réticulation de la phase caoutchoutique du polybutadiène. Ce changement est insignifiant vu l'écart important entre les différentes mesures des essais de traction.

### Exemple 2 : Traitement du PC contenant du DBDE

Les échantillons du PC contenant 10% massique de DBDE ont été traités avec le procédé de l'invention dans l'installation décrite ci-dessus.

Tous les échantillons sont sous forme de films d'épaisseurs moyenne de 80 µm.

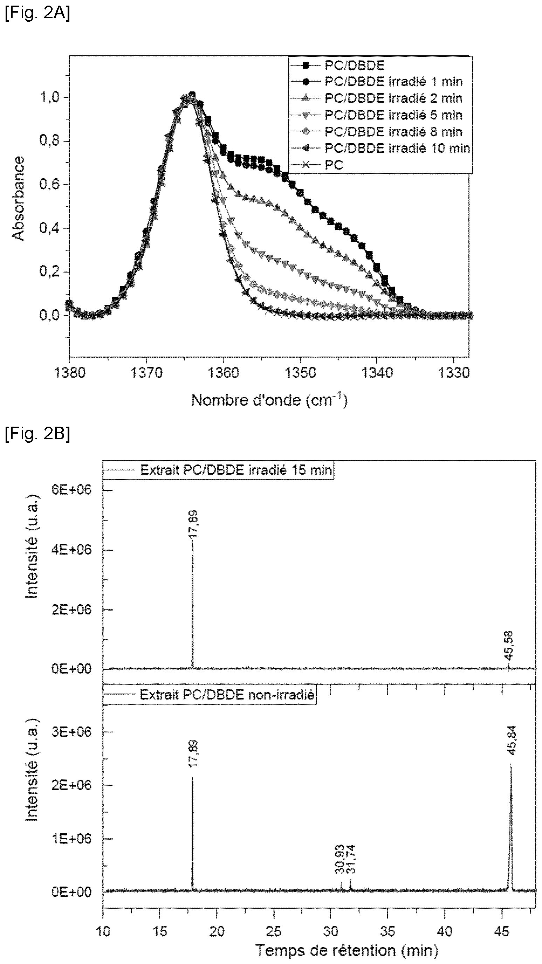

La figure 2A montre l'évolution de la bande 1350 cm⁻¹ du DBDE au cours de l'irradiation du film de PC/DBDE qui illustre l'effet des rayonnements sur la présence du DBDE dans le polycarbonate. On constate le déclin graduel de l'épaulement à 1350 cm⁻¹ correspondant au DBDE jusqu'à sa disparition après 10 minutes d'irradiation. Il s'agit de la seule modification observable dans le spectre en mode de transmission.

La cinétique de la photodégradation a été suivie par chromatographie en phase gaz couplée à de la spectrométrie de masse (GC/MS). Les additifs extraits sont solubilisés dans le THF contenant un standard externe. La solution est injectée dans la colonne de GC/MS à plusieurs temps d'irradiation. Le calcul des concentrations restantes du DBDE se fait grâce à la courbe d'étalonnage préalablement tracée.

La figure 2B représente un exemple de chromatogrammes obtenus avant et après 15 minutes d'irradiation. Le pic du DBDE à un temps de rétention de 45 minutes ainsi que les traces de nonaBDE diminuent clairement. Le calcul des intégrales des pics par rapport à la référence indique un taux de DBDE résiduel de 1,5%.

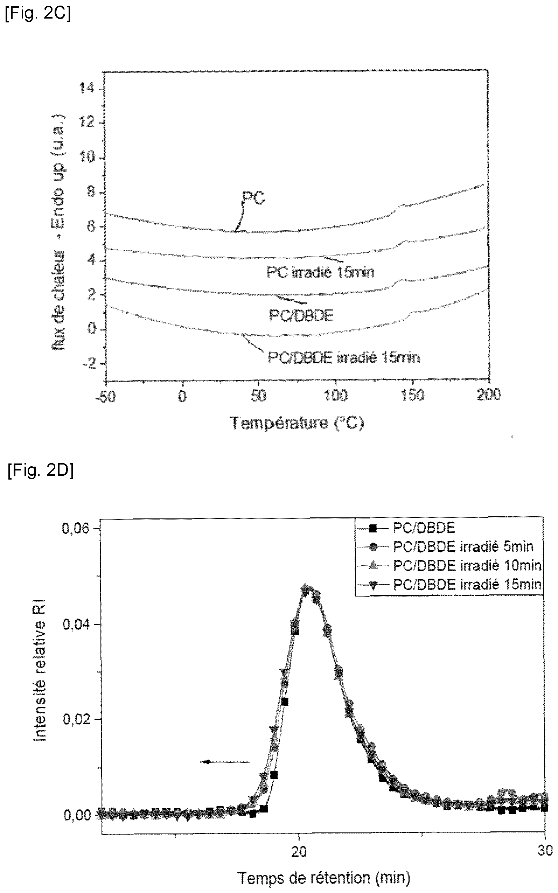

Les thermogrammes de la calorimétrie différentielle à balayage (Figure 2C) du polycarbonate chargé de 10% massique de DBDE avant et après 15 minutes d'irradiation ont révélé une augmentation de la température de transition vitreuse. En effet, la température de transition vitreuse du polycarbonate chargé a augmenté de 139,1 ± 2,1 °C à 149,0 ± 4,1 °C. Cette variation, visible dans les thermogrammes (Figure 2C), indique un effet de réticulation du polymère irradié en présence des radicaux de brome. Cependant, cette augmentation de température de transition vitreuse n'affecte pas la recyclabilité du polycarbonate vu les températures d'utilisation du PC qui sont beaucoup plus élevées.

La figure 2D représente l'évolution de la courbe d'élution du PC-10%DBDE initial et pour différents temps de traitement selon le procédé de l'invention. L'analyse en chromatographie par perméation de gel confirme le résultat précédent de DSC. En effet, on remarque une légère augmentation de la masse moléculaire du polymère linéaire. La bande du polycarbonate s'élargit dans le sens des hautes masses molaires.

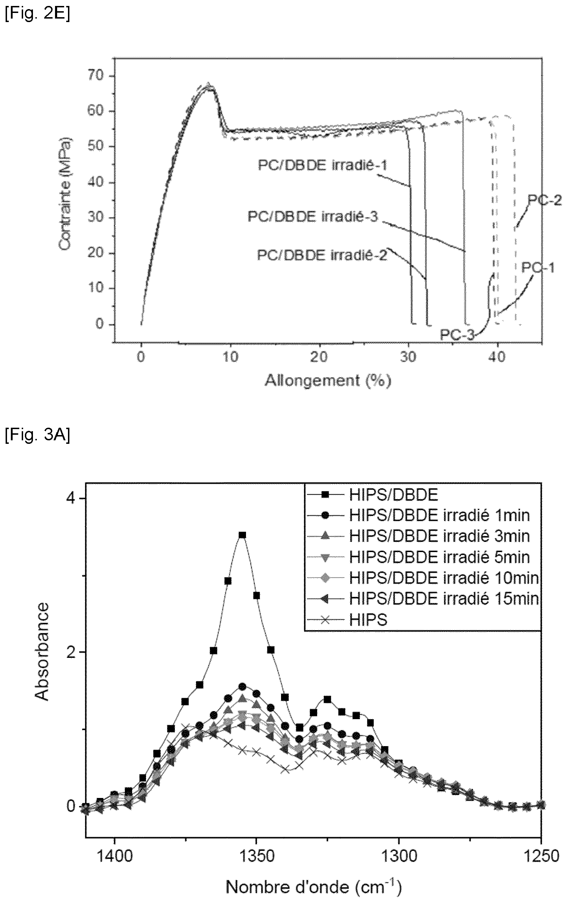

Pour déterminer l'effet du procédé de l'invention sur les propriétés mécaniques du polycarbonate, les films PC/DBDE irradiés ont été dilués (10% de mélange traité selon le procédé de l'invention mélangé avec un polymère vierge) dans le plastique vierge afin d'avoir une quantité suffisante de matière pour effectuer plusieurs essais. Les diagrammes contrainte-déformation, présentés dans la figure 2E, montrent un écart important entre les différentes mesures. Néanmoins, on observe un déplacement de l'élongation moyenne après l'incorporation de la matière irradiée. En effet, l'allongement à la rupture moyen du polycarbonate a diminué de 26%. Le mélange devient donc moins ductile après traitement ce qui est dû à la réticulation partielle mise en évidence précédemment.

Quant à la résistance à la traction, on observe une légère augmentation de la contrainte durant l'écrouissage après le traitement selon le procédé de l'invention, confirmant ainsi l'influence de la réticulation des films traités dans le mélange final. La contrainte à la rupture moyenne demeure quasi inchangée malgré le traitement selon le procédé de l'invention.

### Exemple 3 : Traitement du HIPS contenant du DBDE

Les échantillons du HIPS contenant 10% massique de DBDE ont été traités avec le procédé de l'invention dans l'installation décrite ci-dessus.

Tous les échantillons sont sous forme de films d'épaisseurs moyenne de 60 µm.

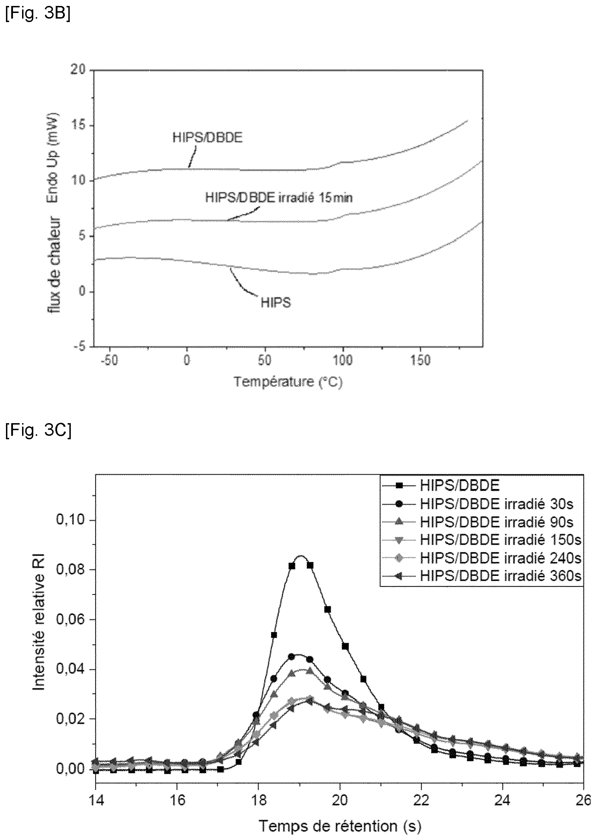

Le suivi par FTIR en mode transmission montre donc une diminution rapide de la bande du DBDE à 1350 cm⁻¹ similaire au mélange analogue d'ABS contenant du DBDE (voir Fig. 3A). Un plateau de conversion est atteint après 5 minutes d'irradiation. Les résultats de l'analyse DSC ne montrent aucune augmentation de la température de transition vitreuse de la phase styrènique qui se trouve autour de 95°C (voir Fig. 3B).

La figure 3C représente l'évolution de la courbe d'élution en GPC du PC-10%DBDE au cours du traitement selon le procédé de l'invention. On remarque un élargissement du pic du HIPS des deux côtés, indiquant l'occurrence des phénomènes de scissions de chaines et de réticulation simultanément.

Le calcul des masses par rapport à la référence montre globalement une légère augmentation de la masse moléculaire (Mw) accompagnée d'une augmentation de la polydispersité dès la première minute de l'irradiation. Ces paramètres restent assez stables avec le temps d'irradiation.

### Exemple 4 : Traitement de l'ABS contenant du DBDPE

Les échantillons d'ABS contenant 10% massique de DBDPE ont été traités par le procédé de l'invention dans l'installation décrite ci-dessus.

Tous les échantillons sont sous forme de films d'épaisseurs moyenne de 80 µm.

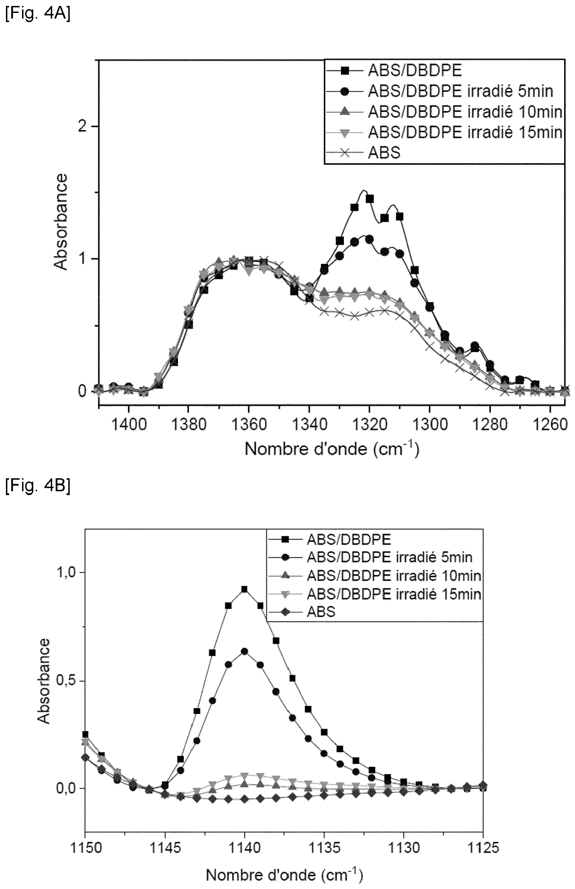

Les figures 4A et 4B montrent l'évolution du spectre infrarouge dans la zone d'intérêt entre 1400 cm⁻¹ et 1000 cm⁻¹ où l'on observe plusieurs bandes correspondant au DBDPE, notamment la bande la plus large à un maximum à 1322 cm⁻¹. On constate que toutes les bandes du DBDPE disparaissent entre 5 et 10 minutes d'irradiation.

### Exemple 5 : Effet d'irradiation UV-visible sur le PC contenant du DBDPE

Les échantillons du PC contenant 10% massique de DBDPE ont été traités avec le procédé de l'invention dans l'installation décrite ci-dessus.

Tous les échantillons sont sous forme de films d'épaisseurs moyenne de 80 µm.

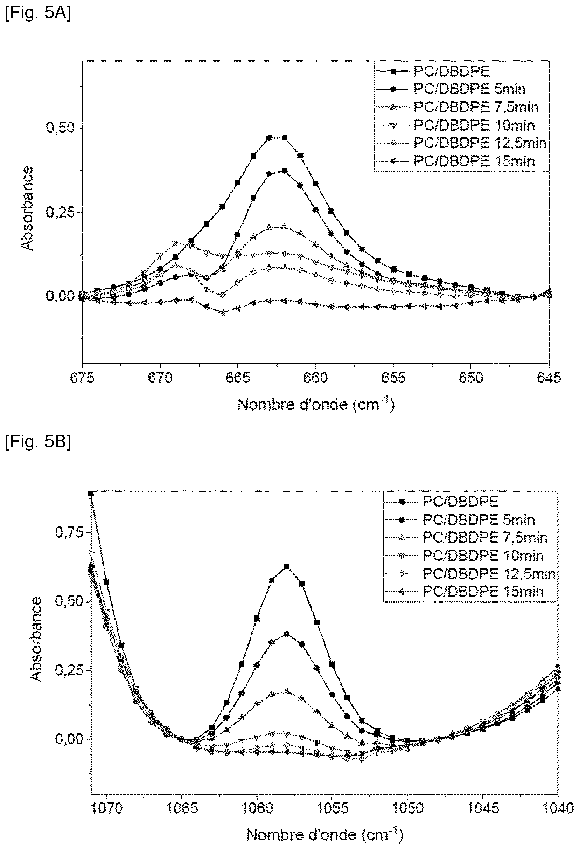

Le DBDPE ne présente pas de bandes assez intenses qui ne chevauchent pas celles du polycarbonate. Cependant, deux bandes de faible intensité ont pu être détectées en transmission. Les figures 5A et 5B montrent une disparition des bandes à 662 cm⁻¹ et 1058 cm⁻¹ au bout de 15 minutes de traitement selon le procédé de l'invention, ce qui montre que les temps de réaction sont du même ordre de grandeur que le mélange précédent PC/DBDE et du DBDPE dans l'ABS.

### Exemple 6 : Traitement du HIPS contenant du DBDPE

Les échantillons du HIPS contenant 10% massique de DBDPE ont été traités avec le procédé de l'invention dans l'installation décrite ci-dessus.

Tous les échantillons sont sous forme de films d'épaisseurs moyenne de 80 µm.

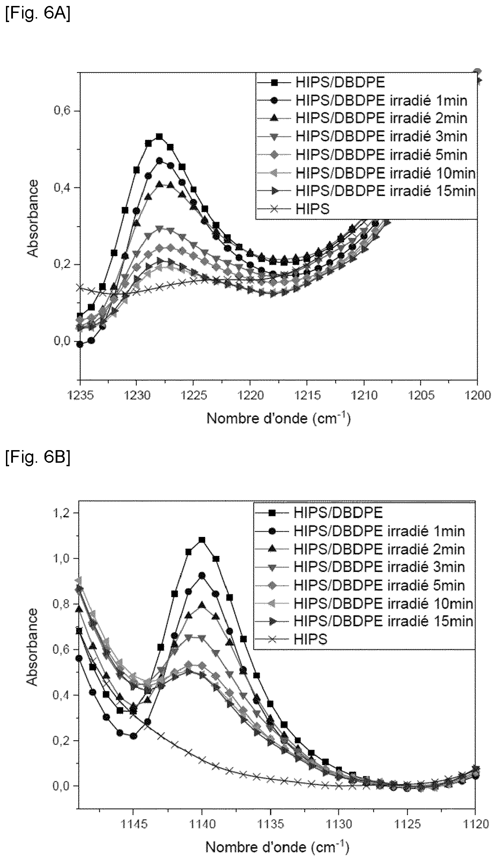

Les figures 6A et 6B montrent l'évolution des bandes 1227 cm⁻¹ et 1140 cm⁻¹ du DBDPE (FTIR en mode transmission) au cours de l'irradiation du film du HIPS contenant 10% de DBDPE. Le suivi par FTIR du traitement selon le procédé de l'invention montre la diminution progressive jusqu'à 80% de l'intensité des bandes du DBDPE.

### Exemple 7 : Traitement de l'ABS contenant du TTBPT

Les échantillons d'ABS contenant 10% massique de TTBPT ont été traités avec le procédé de l'invention dans l'installation décrite ci-dessus.

Tous les échantillons sont sous forme de films d'épaisseurs moyenne de 90 µm.

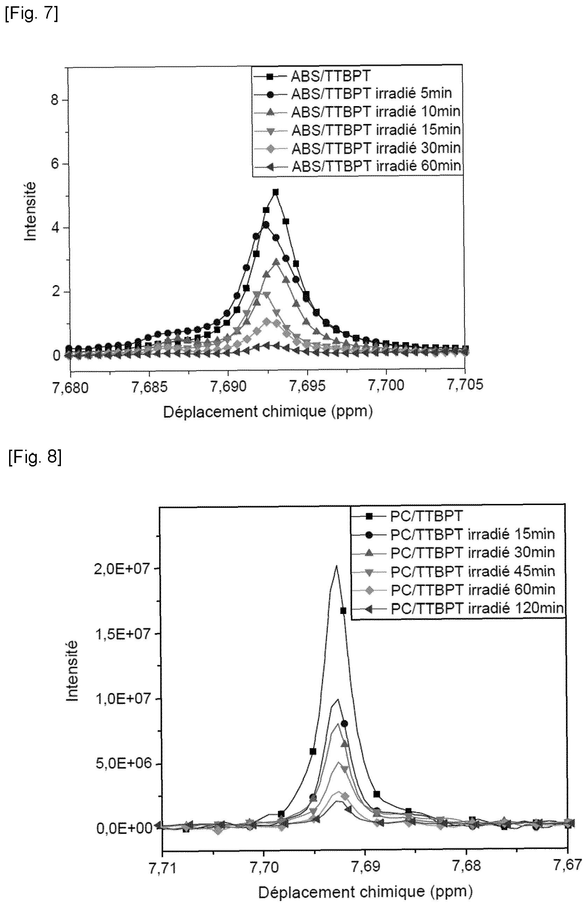

Le suivi de la photodégradation du TTBPT dans l'ABS par RMN du proton montre une diminution du pic des protons aromatiques déblindés avoisinant les atomes de brome à 7,60 ppm en une heure de traitement selon le procédé de l'invention (voir Fig. 7). Ceci confirme l'abattement du brome aromatique par clivage de la liaison C-Br. La diminution de ce pic s'accompagne de l'apparition des pics dans la région du proton aromatique suggérant la substitution progressive des atomes de brome par des protons.

### Exemple 8 : Traitement du PC contenant du TTBPT

Les échantillons du PC contenant 10% massique de TTBPT ont été traités avec le procédé de l'invention dans l'installation décrite ci-dessus.

Tous les échantillons sont sous forme de films d'épaisseurs moyenne de 90 µm.

L'évolution du mélange de polycarbonate contenant 10% de TTBPT est suivie par RMN du proton en appliquant la méthode décrite pour le mélange ABS/TTBPT en solubilisant 20 mg dans une solution de chloroforme deutéré contenant 200 ppm d'acétamide comme standard externe. L'intégrale du pic correspondant au TTPBT est comparée à celle de l'acétamide à 2,05 ppm afin d'améliorer la fiabilité et la reproductibilité de la quantification.

La figure 8 montre la diminution du pic du TTBPT avec le temps de traitement. Cependant, les durées de traitement permettant d'atteindre une conversion maximale sont plus longue que dans le cas des molécules précédentes. En effet, la constante de vitesse déterminée suivant un modèle de premier ordre est de 0,03 min⁻¹ et le temps de demi-vie correspondant est de 30 minutes dans le mélange PC/TTBPT.

### Exemple 9 : Traitement du HIPS contenant du TTBPT

Les échantillons du HIPS contenant 10% massique de TTBPT ont été traités avec le procédé de l'invention dans l'installation décrite ci-dessus.

Tous les échantillons sont sous forme de films d'épaisseurs moyenne de 90 µm.

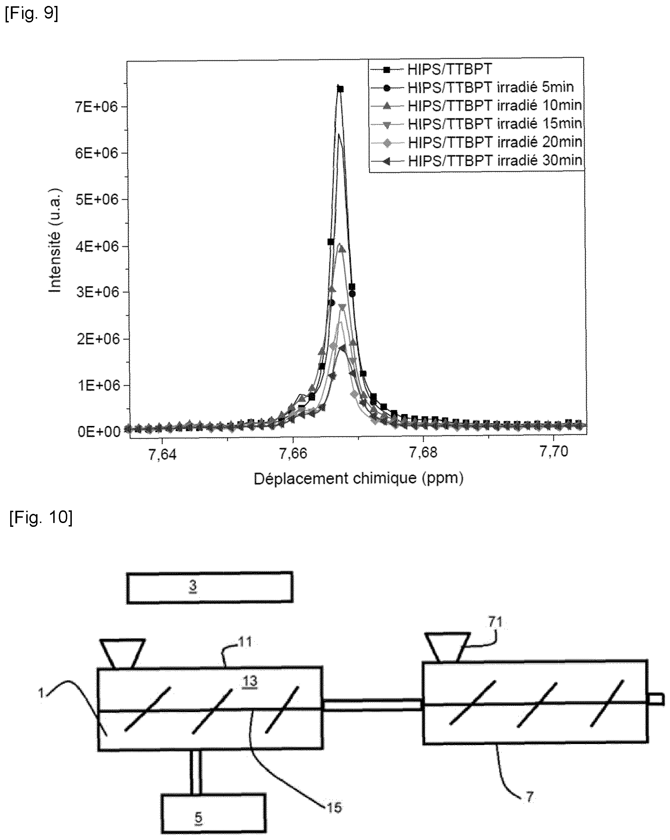

L'effet du traitement selon le procédé de l'invention pour ce mélange a été suivi par RMN du proton suivant la méthode détaillée précédemment. La figure 9 représente l'évolution du spectre RMN du mélange HIPS/TTBPT au cours du traitement. En référence à cette figure, on observe une diminution du pic des protons aromatiques déblindés avoisinant les atomes de brome à 7,67 ppm au cours du traitement. L'intensité de ce pic se stabilise après 30 minutes, ce qui indique que la réaction de photo dégradation atteint un plateau de conversion.

### Installation industrielle

En référence à la Fig. 10, une installation industrielle permettant la mise en oeuvre du procédé de l'invention va maintenant être décrite. L'installation comporte un dispositif d'irradiation et de mélange 1, une source de rayonnement UV-visible 3, une pompe à vide 5 et une extrudeuse 7 apte à être alimentée avec une matière plastique à l'état fondu ou divisé via sa trémie 71. Le dispositif d'irradiation et de mélange 1 comporte au moins une portion de sa paroi externe 11 laissant passer le rayonnement émis par la source 3 jusque dans le volume interne 13 défini par la paroi 11. La paroi 11 comporte des moyens de fermeture (non représentés) qui permettent de rendre le volume interne 13 hermétique/étanche aux gaz et liquides. Des moyens de mélange 15 sont adaptés au volume interne 13 du dispositif d'irradiation et de mélange 1. La source 3 est disposée de manière à irradier suffisamment le volume interne 13. La source 3 est une source UV-visible émettant un rayonnement approprié pour la mise en oeuvre du procédé de l'invention. La sortie du dispositif d'irradiation et de mélange 1 est connectée à l'entrée de l'extrudeuse 7.

Le fonctionnement de l'installation va maintenant être décrit. La matière plastique est introduite à l'état divisé dans le dispositif d'irradiation et de mélange 1 via la trémie. Une fois que le volume interne 13 contient suffisamment de matière plastique à l'état divisé, on le rend hermétique en fermant les ouvertures de sortie et d'entrée du dispositif d'irradiation et de mélange 1. On fait le vide dans le volume interne 13 grâce à la pompe à vide 5. On mélange la matière plastique à l'état divisé et on l'irradie avec la source 3 de manière à obtenir la débromation souhaitée de la matière plastique contenue dans le volume interne 13. Une fois la matière plastique traitée, on la transfère dans l'extrudeuse 7 où elle est fondue et mélangée à de la matière plastique compatible ou identique et exempte de retardateur de flamme bromé. On obtient, en sortie de l'extrudeuse 7, un mélange de matière plastique recyclée et de matière plastique vierge.

## Revendications

1. Procédé de débromation d'au moins un retardateur de flamme bromé contenu dans une matière plastique, selon lequel on soumet ladite matière plastique à une irradiation dans le spectre UV-visible, **caractérisé en ce que** ladite irradiation est mise en oeuvre dans une atmosphère qui présente avant l'irradiation, une pression égale ou inférieure à 100 Pa et supérieure ou égale à 0,1 Pa et notamment égale à 2 Pa, 1,5 Pa, 1 Pa ou 0,5 Pa.

2. Procédé selon la revendication 1, **caractérisé en ce que** ladite atmosphère est constituée d'air.

3. Procédé selon l'une quelconque des revendications précédentes, **caractérisé en ce que** ladite irradiation est mise en oeuvre à une température égale ou supérieure à 18°C et égale ou inférieure à 25°C ou à une température égale ou supérieure à la température de fusion de ladite matière plastique et inférieure à la température de dégradation thermique de ladite matière plastique.

4. Procédé selon l'une quelconque des revendications précédentes, dans lequel l'irradiation UV-visible est effectuée à des longueurs d'ondes égale ou supérieures à 200 nm et inférieures ou égales à 800 nm, de préférence égale ou supérieures à 250 nm et inférieures ou égales à 600 nm et plus préférentiellement égale ou supérieures à 280 nm et inférieures ou égales à 600 nm.

5. Procédé selon l'une quelconque des revendications précédentes, dans lequel ladite matière plastique est choisie parmi les matières plastiques contenant ou constituées d'au moins un polymère choisi parmi les polystyrènes, les copolymères styréniques, notamment le polystyrène à fort impact et les copolymères styrène-acrylonitrile, les polyoléfines, les polyamides, les polycarbonates, les polyuréthanes, le polychlorure de vinyle, les copolymères acrylonitrile-butadiène-styrène, les copolymères styrène-butadiène, les copolymères acrylonitrile-styrène-acrylate, le polycaprolactame, le polyhexaméthylène adipamide et les mélanges d'au moins deux de ces polymères.

6. Procédé selon l'une quelconque des revendications précédentes, **caractérisé en ce que** ladite matière plastique est fondue avant ladite irradiation et irradiée à l'état fondu ou divisé et notamment sous la forme de morceaux dont la dimension maximale est égale ou inférieure à 3 mm ou 2 mm.

7. Procédé selon l'une quelconque des revendications précédentes, **caractérisé en ce que** ledit retardateur de flamme bromé est choisi parmi les retardateurs de flamme bromés dont la molécule contient un pourcentage massique de brome égal ou supérieur à 5 et égal ou inférieur à 30 %, les retardateurs de flamme bromés qui contiennent au moins un cycle benzénique, en particulier les polybromodiphényl éthers, et plus particulièrement l'octabromodiphényl éther et le décabromodiphényl éther, le décabromodiphényl éthane et le tris(tribromophenoxy)-s-triazine, le phosphate de tris(2,3-dibromopropyle), le 2,2-bis(bromométhyl)-1,3-propanediol

8. Installation permettant la mise en oeuvre du procédé selon l'une quelconque des revendications précédentes, du type comportant un dispositif d'irradiation et de mélange (1) de la matière plastique à l'état divisé ou fondu, lequel comporte une paroi externe (11) qui définit un volume interne (13), lequel est tournant ou/et équipé de moyens de mélange (15), ledit volume interne (13) présentant une entrée et une sortie, au moins une partie de ladite paroi externe (11) est transparente aux longueurs d'ondes égales ou supérieures à 200 nm et égales ou inférieures à 800 nm et au moins une source de rayonnement UV-visible (3), disposée de manière à irradier ledit volume interne, **caractérisée en ce que** ladite paroi externe (11) comporte des moyens de fermeture aptes à rendre ledit volume interne hermétique aux gaz et liquides et **en ce que** ledit volume interne (13) est connecté à des moyens d'aspiration (5) aptes à engendrer dans ledit volume interne une pression inférieure à la pression atmosphérique normale, en particulier une pression égale ou inférieure à 100 Pa et plus particulièrement égale ou inférieure à 2 Pa,1,5 Pa, 1Pa ou 0,5 Pa.

9. Installation selon la revendication 8, **caractérisée en ce qu'**elle comporte en outre, un mélangeur secondaire (7) de la matière plastique à l'état divisé ou fondu, apte à être alimenté avec une autre matière plastique à l'état fondu et **en ce que** l'entrée dudit mélangeur secondaire (7) est connectée à la sortie du volume interne (13) dudit dispositif d'irradiation et de mélange (1).
